(19) Europäisches Patentamt
European Patent Office
Office européen des brevets

(11) **EP 4 507 182 A1**

(12) **EUROPEAN PATENT APPLICATION**

(43) Date of publication:
**12.02.2025 Bulletin 2025/07**

(21) Application number: **23382841.7**

(22) Date of filing: **11.08.2023**

(51) International Patent Classification (IPC):
**H02M 7/00** (2006.01)   **H02M 7/02** (2006.01)
**H02M 7/04** (2006.01)

(52) Cooperative Patent Classification (CPC):
**H02M 1/4258; H02M 1/0058; H02M 1/15;**
H02M 7/219

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Differential Power, SL**
**28042 Madrid (ES)**

(72) Inventor: **COBOS MARQUEZ, Jose Antonio**
**28042 Madrid (ES)**

(74) Representative: **Torner, Juncosa I Associats, SL**
**C / Pau Claris, 108, 1r 1a**
**08009 Barcelona (ES)**

(54) **AN AC-DC SWITCH MODE ELECTRICAL POWER CONVERTER**

(57)     An AC-DC switch mode electrical power converter is proposed. It comprises an input half-bridge comprising a first input capacitor and a second input capacitor, connected in series, configuring an input capacitive leg, and a first input power switch and a second input power switch, connected in series, configuring an input switching leg; an output half-bridge comprising a first output capacitor and a second output capacitor, connected in series, configuring an output capacitive leg, and a first output power switch and a second output power switch, connected in series, configuring an output switching leg; and a transformer. A terminal of a primary winding of the transformer is connected to a terminal of an AC input voltage source, and another terminal of the primary winding is connected to a middle point of the input capacitive leg or to a middle point of the switching leg. An input current and an output voltage are controlled based on control variables.

Fig.2

EP 4 507 182 A1

## Description

Technical Field

The present invention generally relates to the field of electrical power converters. More specifically, the invention relates to an AC-DC switch mode electrical power converter with Power Factor Correction and tight regulation of the output voltage.

Background of the Invention

An AC-DC electrical power converter with power factor correction and tight regulation of the output voltage is known by Tuan Ngo, et al. "A Single-Phase Bidirectional Dual Active Half-Bridge Converter" [1]. The converter includes two cascaded power stages, which is the typical and most broadly used power supply architecture for AC-DC power converters supplying more than 75W, which require by regulation to incorporate Power Factor Correction (PFC).

The first power stage, known as a "Power Factor correction stage", takes an input current nearly proportional to the AC supply input voltage, so that power factor is close to one. For a sinusoidal input voltage, e.g. 50Hz or 60Hz, the current is also sinusoidal. Hence, the power taken from the AC input voltage source is pulsating between 0 and twice the output power P. The reason is that the product of a sine waveform (input voltage) multiplied by another sine waveform (the input current) yields a squared sine, which is a cosine waveform of twice the line frequency, e.g. 100Hz or 120Hz, plus a mean value, which is the DC output power.

Since there is a difference between the pulsating input power at twice the line frequency, typically 100Hz or 120Hz, and the constant DC power supplied to the load, there must be a storage capacitor, Cs, to store the excess of input power during the cycle angle form 45º to 135º and deliver that stored energy between 0º and 45º and from 135º to 180º. These type of power converters, that is, the rectifiers with power factor correction are known as "energy buffered converters". The same applies on the other direction of the power flow. DC-AC inverters supplied from batteries with almost constant output current, require an internal storage capacitor to balance the difference between the pulsating output power and the constant DC input power.

It is important to note that the storage capacitor must have a twice-the-line-frequency ripple, because it is storing and releasing energy at twice the line frequency. It is not a question of control, but a question of power and energy processing.

This fact yields the requirement to have a second power stage to eliminate the "low frequency" (twice the line frequency) ripple. The second power stage is a DC-DC converter, typically supplied from the output capacitor of the first PFC stage, which is typically the storage capacitor Cs.

The typical structure of an AC-DC converter with PFC is a typical 4-diode bridge followed by a variable gain DC-DC converter, referred to as PFC DC-DC converter. The diode bridge converts the negative voltage of the AC input voltage into a positive voltage so that the absolute value of a sinusoid (so called a rectified voltage) is applied to the PFC DC-DC converter. This PFC DC-DC converter is therefore supplied by an input voltage that changes from 0V to $110 \cdot \sqrt{2}$ V or $220 \cdot \sqrt{2}$ V, depending on the geographical location.

A broadly used alternative, and more efficient approach, is to integrate the functionality of the diode bridge with the PFC DC-DC converter in the so called "Bridgeless boost PFC DC-DC converter". It is more efficient because the input current flows through two power switches in series rather than through at least three power switches. Conduction losses are therefore lower.

In [1], the PFC stage is a "bridgeless half-bridge boost" PFC power converter as described by Ramesh Srinivasan et al. "A unity power factor converter using a half-bridge topology" [2], with the advantage that input current only flows through one power switch, further reducing conduction losses, at the expense of higher voltage in the storage capacitor. In some applications, the switching leg of the half-bridge is replaced by a "flying capacitor" or a "switched capacitor" leg to reduce the voltage applied to the power switches.

The role of the DC-DC converter in the second stage is to regulate the output voltage eliminating the "low frequency ripple" (typically 100Hz or 120Hz) present in the storage capacitor. This power converter operates at a switching frequency (typically >1 00kHz) which is orders of magnitude higher than line frequency.

Likewise, in [1], the second stage belongs to the family of the "Dual Active Bridge, DAB" converters. Whereas typical DAB are composed by two full-bridge stages connected through a transformer and eventually an additional inductance in series with the transformer, in [1] the full-bridges are replaced by "half-bridges", reducing conduction loss.

In summary, it is important to note that AC-DC converters with PFC require to control two flows of energy: the first one to drain an input current proportional to the input voltage and store the energy in a storage capacitor; the second one to eliminate the "low frequency" voltage ripple and generate a constant and regulated DC output voltage.

As a consequence, these two power conversions require two control variables and two inductances. In [1] there is an inductor in the PFC stage and one transformer in series with an inductor in the second DC-DC stage.

The power architecture, however, may be improved as proposed in this invention, by combining the two power stages into just one, and combining the two inductances in just one magnetic component: the transformer. In fact, the magnetizing inductance is used to regulate the power flow for the PFC functionality and the leakage inductance is used to regulate the power flow of the second DC-DC converter.

This way, volume, cost and losses are reduced, compared to the state-of-the-art converters.

Description of the Invention

Embodiments of the present invention provide an AC-DC switch mode electrical power converter, that as known in the field, comprises: an input half-bridge including a first input capacitor and a second input capacitor, connected in series, configuring an input capacitive leg of the input half-bridge, and a first input power switch and a second input power switch, connected in series, configuring an input switching leg of the input half-bridge; an output half-bridge comprising a first output capacitor and a second output capacitor, connected in series, configuring an output capacitive leg of the output half-bridge, and a first output power switch and a second output power switch, connected in series, configuring an output switching leg of the output half-bridge; and a transformer, a secondary winding of the transformer being connected between a middle point of the output capacitive leg and a middle point of the output switching leg.

Unlike the known solutions in the field, in the proposed AC-DC switch mode electrical power converter a first terminal of a primary winding of the transformer is configured to be connected to a terminal of an AC input voltage source, and a second terminal of the primary winding is connected to a middle point of the input capacitive leg or to a middle point of the switching leg, being another terminal of the AC input voltage source configured to be connected to the middle point of the input switching leg or to the middle point of the capacitive leg. Moreover, the input current and the output voltage of the AC-DC switch mode electrical power converter are controlled based on control variables, in particular, based on a duty cycle of the input half-bridge, a duty cycle of the output half-bridge, and a phase shift between the duty cycle of the half-bridge and the duty cycle of the output half-bridge.

In some embodiments, the control variables are calculated by a regulator based on sensed output, input or internal variables of the AC-DC switch mode electrical power converter. For example, the sensed variables can comprise an output voltage of the converter, an output power, etc.

In some embodiments, the power switches are configured to be turned to an ON and/or OFF state based on driving signals. These driving signals are particularly generated by a modulator, which is operatively connected to the regulator, to receive the control variables as inputs.

In some embodiments, the duty cycle of the input half-bridge is configured to control the input current of the AC-DC switch mode electrical power converter in order the input current be proportional to the voltage of the AC input voltage source, and the phase shift is configured to regulate the output voltage of the AC-DC switch mode electrical power converter.

In some of said embodiments, the duty cycle of the output half-bridge can be configured to enable zero voltage switching (ZVS) of the power switches.

In some embodiments, the AC-DC switch mode electrical power converter also includes a series inductance that is connected in series with the primary winding of the transformer. The AC-DC switch mode electrical power converter can also include a load connected to the positive voltage DC rail and to the negative voltage DC rail of the output half-bridge.

In some embodiments, any of the input capacitive leg, input switching leg, output capacitive leg, and/or output switching leg is/are configured as a switched capacitor leg.

In yet some embodiments, the transformer can be a three-phase transformer. In this case, the AC-DC switch mode electrical power converter comprises three input switching legs and three output switching legs.

Brief Description of the Drawings

The previous and other advantages and features will be more fully understood from the following detailed description of embodiments, with reference to the attached figures, which must be considered in an illustrative and non-limiting manner, in which:

Fig. 1 illustrates a 2-stage AC-DC electrical power converter, comprising a bridgeless boost half-bridge power factor corrector cascaded by a dual active half-bridge DC-DC power converter, according to the prior art.

Fig. 2 illustrates the proposed AC-DC switch mode electrical power converter, according to an embodiment of the present invention.

Fig. 3 illustrates the building blocks of the controller of the AC-DC switched mode electrical power converter, including the regulator that calculates the control variables d1, d2 and θ using the values of the sensed variables and the modulator that generates the driving signals of the power switches.

Fig.4A graphically illustrates the line frequency (50Hz) waveforms of the voltage, current and power waveforms at the AC input voltage source, where the input current is proportional to the input voltage and the input power is the product of both magnitudes.

Fig. 4B graphically illustrates the line frequency (50Hz) waveforms of the voltage at the input and output capacitors as well as the magnetizing current and the voltage in the secondary winding of the transformer.

Fig. 5A graphically illustrates the switching frequency (200kHz) waveforms of the driving signals of the power switches of the input and output half-bridge converters, where a phase shift can be observed, as well as the resulting voltage in the leakage inductance, that drives the transformer current injected to the half-bridge output converter for a line angle of 0 degrees.

Fig. 5B graphically illustrates the switching frequency (200kHz) waveforms of the driving signals of the power switches of the input and output half-bridge converters, where a phase shift can be observed, as well as the resulting voltage in the leakage inductance, that drives the transformer current injected to the half-bridge output converter for a line angle of 90 degrees.

Fig. 6 illustrates a switched capacitor leg, according to an embodiment of the present invention.

Fig. 7 illustrates an inductance connected in series with the transformer.

Fig. 8 illustrates a three-phase bridgeless DPx-PFC power converter, according to an embodiment of the present invention.

Detailed Description of the Invention and of Preferred Embodiments

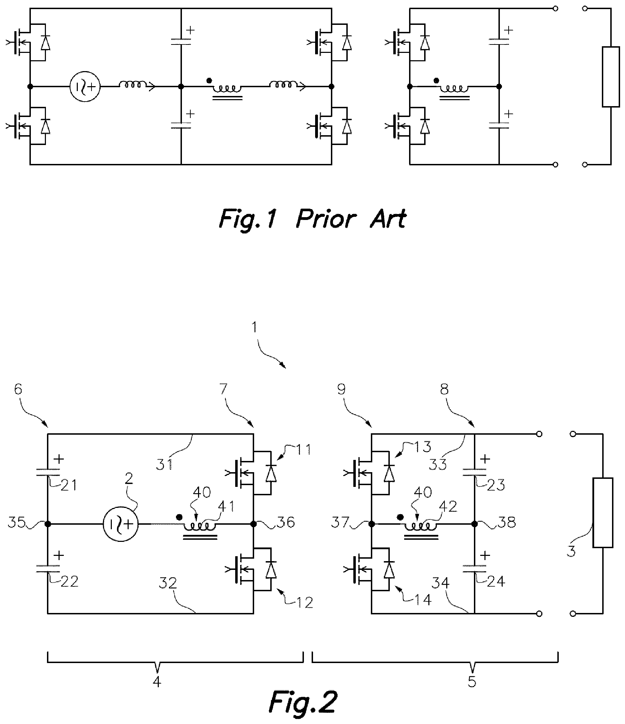

Fig. 2 shows a generic embodiment of the proposed AC-DC switch mode electrical power converter 1, or simply power converter 1, from now on. As seen in Fig. 2, this basic embodiment of the power converter 1 comprises a transformer 40, which is the only magnetic component included or forming part of the power converter 1, an input half-bridge 4, and an output half-bridge 5. The input half-bridge 4 includes a first input capacitor 21 connected in series to a second input capacitor 22; forming an input capacitive leg 6, and a first input power switch 11 connected in series to a second input power switch 12, forming an input switching leg 7. The output half-bridge 5 includes a first output capacitor 23 connected in series to a second output capacitor 24, forming an output capacitive leg 8, and a first output power switch 13 connected to a second output power switch 14, forming an output switching leg 9.

The secondary winding 42 of the transformer 40 is connected between the middle point 38 of the output capacitive leg 8 and the middle point 37 of the output switching leg 9. On the other hand, one of the terminals of the primary winding 41 of the transformer 40 is connectable to a terminal of an AC input voltage source 2, and the other of the terminals of the primary winding 41 is connectable either to the middle point 35 of the input capacitive leg 6 or to the middle point 36 of the switching leg 7, such that the other terminal of the AC input voltage source 2 is connectable to the remaining middle point (36 or 35), depending on the primary winding previous configuration.

As also seen in the figure, The power converter 1 can also comprise a load 3 connected thereto. In particular, connected to the positive voltage DC rail 33 and to the negative voltage DC rail 34 of the output half-bridge 5.

Note that the proposed converter 1 can be regarded as a single-stage power converter since a magnetizing inductance and a leakage inductance (not shown in the figures) of the transformer 40 are used to regulate the two power conversions that are required to implement an AC-DC power converter with Power Factor Correction (PFC).

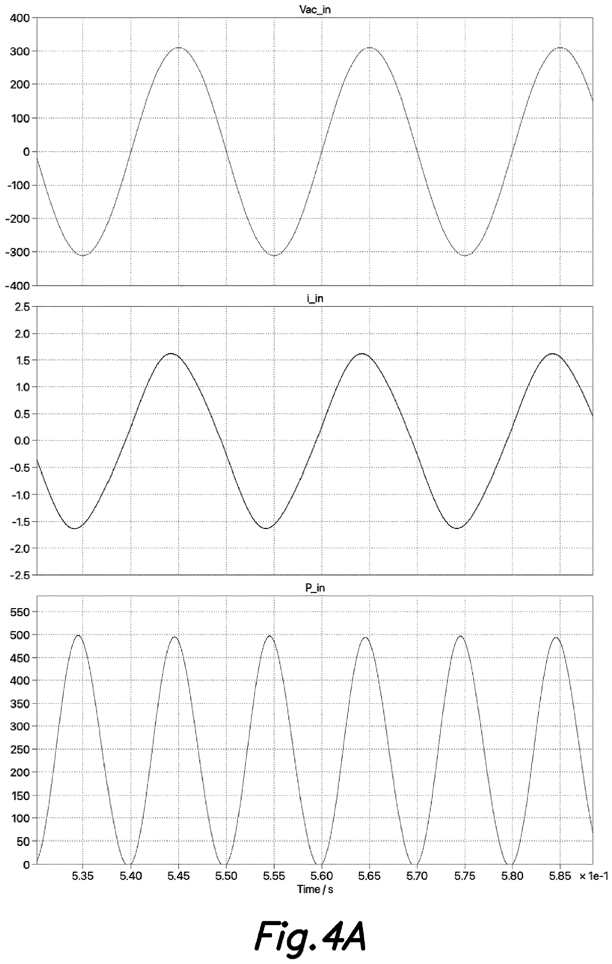

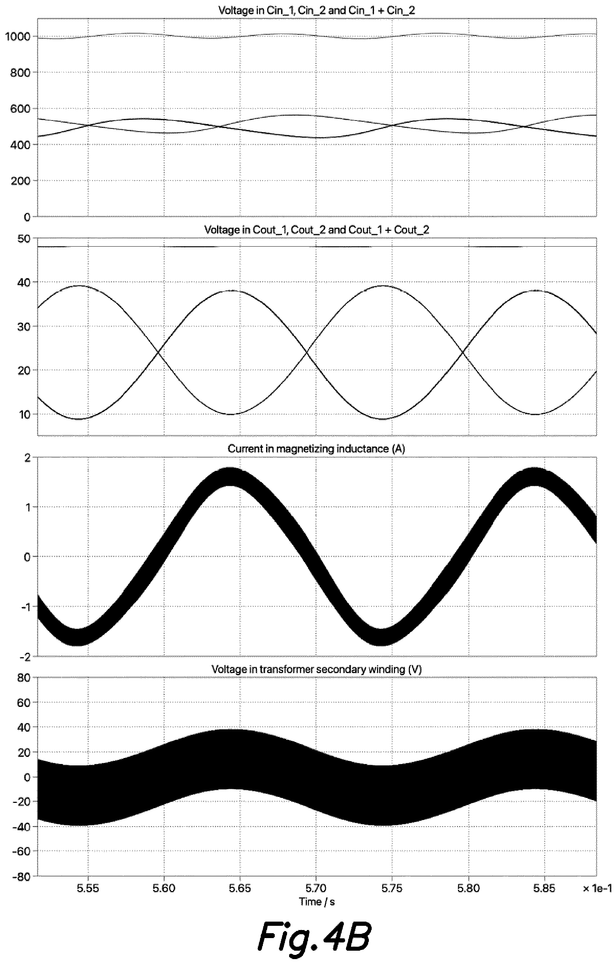

Therefore, the power converter 1 can be operated to take an input current from the AC input voltage source 2 proportional to such voltage, i.e. PFC, as shown in Fig. 4A. The power converter 1 also has the capability to regulate an output voltage of the power converter 1 (see Fig. 4B) at the switching frequency of the power converter 1 (orders of magnitude higher than the line frequency of the AC input voltage source 2). That is, eliminating the low (twice the line frequency) frequency voltage ripple present in the input and output capacitors 21-24 (see Fig. 4B).

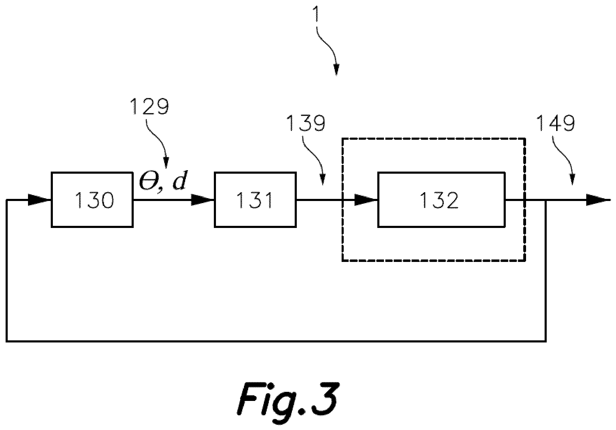

Fig. 3 shows an embodiment of the control architecture controlling the power converter 1. The working principle of the control circuit can be as follows. As seen in the figure, a regulator 130 and a modulator 131 are used in this case. The regulator 130 is the element of the control circuit that computes the control variables $\theta$ and $d$ (d1, d2) 129. In particular, this is done based on sensed output, input or internal variables 149, e.g. an output voltage of the converter ($V_{out}$), a voltage between the positive 31 and negative 32 DC voltage rails of the input half-bridge 4, an input current, etc. of the power converter 1. The modulator 131 is connected to the regulator 130 and is configured to receive the computed control variables 129 and to generate driving signals 139 for all the power switches 11, 12, 13, 14.

The power switches 11, 12, 13, 14, can include any controllable switch such as Metal-Oxide-Semiconductor Field Effect Transistors (MOSFET). In other embodiments, the power switches can include simple diodes and the like.

It should be understood that if the power switches are MOSFET switches, the modulator 131 is adapted/configured to generate the driving signals 139 (i.e. logic control signals) to provide a conducting status on the switches and turn them to an ON and/or OFF state in order to apply the above-described operation.

In an embodiment, operation in the power converter 1 can be as follows:

A) Power Factor correction stage:

- This stage is very similar to the one described in [2] using the magnetizing inductance as the inductor used in [2]. The half-bridge 4 operates in a way that resembles two mirrored buck-boost converters, processing power from one input capacitor 21 (or 22) to the other 22 (or 21), depending on the sign (positive or negative) of the AC input voltage source 2.
- The fact that the AC input voltage source 2 is connected in series with the magnetizing inductance acting as the buck-boost inductor, implies that some power is also taken from the AC input voltage source 2 in addition to the power transferred from one input capacitor 21 (or 22) to the other 22 (or 21).
- The mean value of the current taken from the AC input voltage source 2 may be regulated to be proportional to the voltage, adjusting the duty cycle d1 of the input half-bridge 4.
- Note that the description of the operation of the input half-bridge 4 depends on what is considered "energy source" and what is considered "load". Authors is [2] name this converter "Boost half-bridge", which could also be regarded to as "two mirrored Boost converters forming a half-bridge". The reason is that they consider the energy source to be the AC input voltage source 2 and the load the series connection of the two input capacitors 21, 22, which indeed is the output of the power factor corrector since a load is connected between the positive and negative DC voltage rails of the input half-bridge. Note that the proposed power converter 1 does not include any load connected to the input half-bridge 4.
- The fact that the current injected/taken from the middle point 35 of the capacitive leg 6 is proportional (typically sinusoidal) to the AC input voltage source 2 produces a low frequency (line frequency) voltage ripple in the input capacitors 21, 22, phase shifted 180º. The sum of these two 180º phase-shifted voltages produces a low frequency (twice the line frequency) voltage ripple consistent with the voltage ripple in the storage capacitor Cs of [2], which is in fact the equivalent parallel connection of the two input capacitors 21, 22.

B) DC-DC converter stage:

- The connection of the input half-bridge 4 with the output half-bridge 5 through the transformer 40 resembles the DC-DC converter stage in [1] in which the power flows from the equivalent storage capacitor Cs formed by the series connection of two input capacitors (which equivalent capacitance in terms of energy storage is the parallel connection of the two input capacitors 21, 22 of the proposed power converter 1) to the load 3 connected between the positive 33 and negative 34 DC rails of the output half-bridge 5. However, a significant difference is that the AC input voltage source 2 is connected in series with the transformer 40, which is not the case in [1].
- In fact, the right interpretation of the operation of the DC-DC converter stage of present invention is as follows:

  a. A first "Direct power converter", referred to as DPx, as described by J.A. Cobos et al. "Direct Power Converter -DPx- for High Gain and High Current Applications" [3] that transfers power from the first input capacitor 21 and the AC input voltage source 2 connected in series to the first output capacitor 23 through the transformer 40 and the power switches 11 and 13.
  b. A second DPx converter that transfers power from the second input capacitor 22 and the AC input voltage source 2 connected in series to the second output capacitor 24 through the transformer 40 and the power switches 12 and 14.
  c. Two output mirrored buck boost converters forming the output half-bridge 5 that transfer power from one output capacitor 23 (or 24) to the other output capacitor 24 (or 23) through the power switches 12, 14.
  d. The voltage between the positive DC rail 33 and the negative DC rail 34 is the output voltage (see Fig. 4B) of the power converter 1, where the load 3 is connected. This output voltage is regulated at the switching frequency of the power converter 1, by means of one of the control variables 129, e.g. the phase shift $\theta$ (see Fig.3). Note that the switching frequency of the power converter 1 is orders of magnitude higher than the line frequency of the AC input voltage source 2, hence the line frequency voltage ripple present both in the input capacitors 21, 22 and in the output capacitors 23 and 24 is not present at the load 3, because the regulator 130 controls the voltage ripple in the output capacitors 23, 24 to be equal and opposite, that is, phase shifted 180º.

Therefore, the input half-bridge 4 and the output half-bridge 5 operate in a similar manner, with a significant low frequency (line frequency) voltage ripple in the input middle point 35 and output middle point 38 of the capacitive legs 6, 8. Note the significant difference between the two bridges: the voltage between the positive 31 and negative 32 DC voltage rails of the input half-bridge 4 has a low frequency (twice the line frequency) voltage ripple (see Fig. 4B), consistent with the required energy storage in a PFC capacitor Cs, whereas the low frequency ripple does not exist between the positive 33 and negative 34 DC voltage rails of the output half-bridge 5 (see Fig. 4B), where the load 3 is connected.

In Fig.4A and Fig. 4B the line frequency (50Hz) waveforms are illustrated. In Fig. 4A the voltage, current and power waveforms at the AC input voltage source 2 can be seen, where the input current is proportional to the input voltage and the input power is the product of both magnitudes, as expected in an AC-DC power converter with PFC.

In Fig. 4B the line frequency (50Hz) waveforms of the voltage at the input 21, 22 and output 23, 24 capacitors is illustrated, where the voltage ripple described above can be observed. Likewise, it can be seen that the magnetizing current follows the same sinusoidal evolution as the input current. Finally, the voltage in the secondary winding of the transformer 42, which is consistent with the voltage in the output capacitors 23, 24, is also shown.

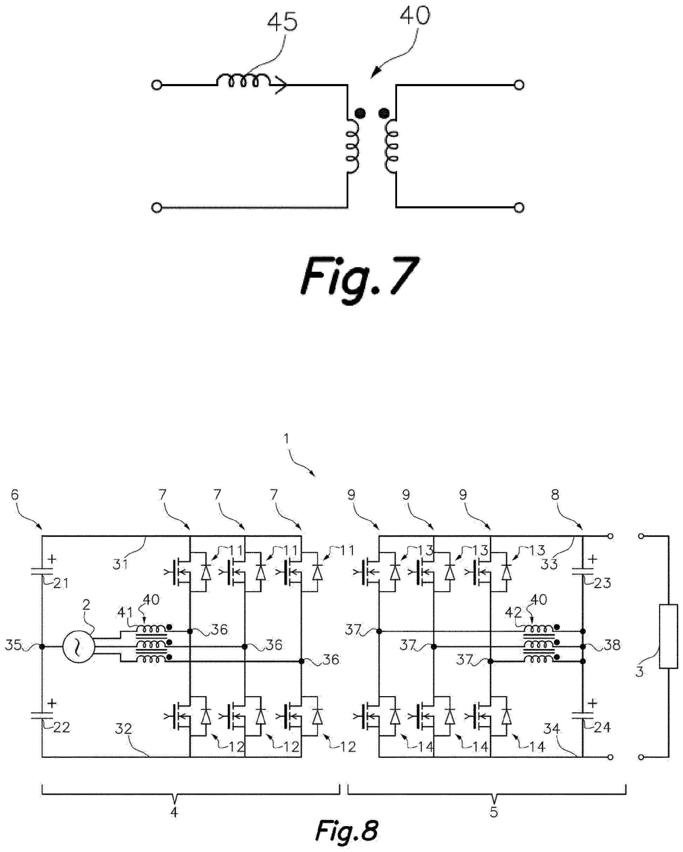

It must be noted that the value of the voltage ripple is dependent on the value of each of the capacitance of each one of the four capacitors 21, 22, 23, 24. The voltage ripple can be also dependent on the value of the leakage inductance of the transformer 40 (or of an inductor, similar to the inductor 45 shown in Fig. 7).

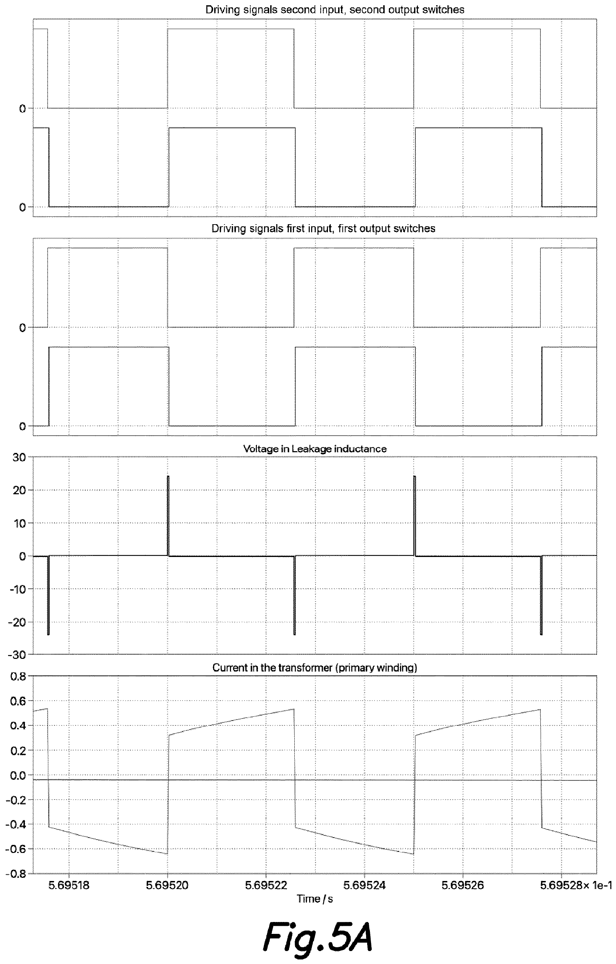

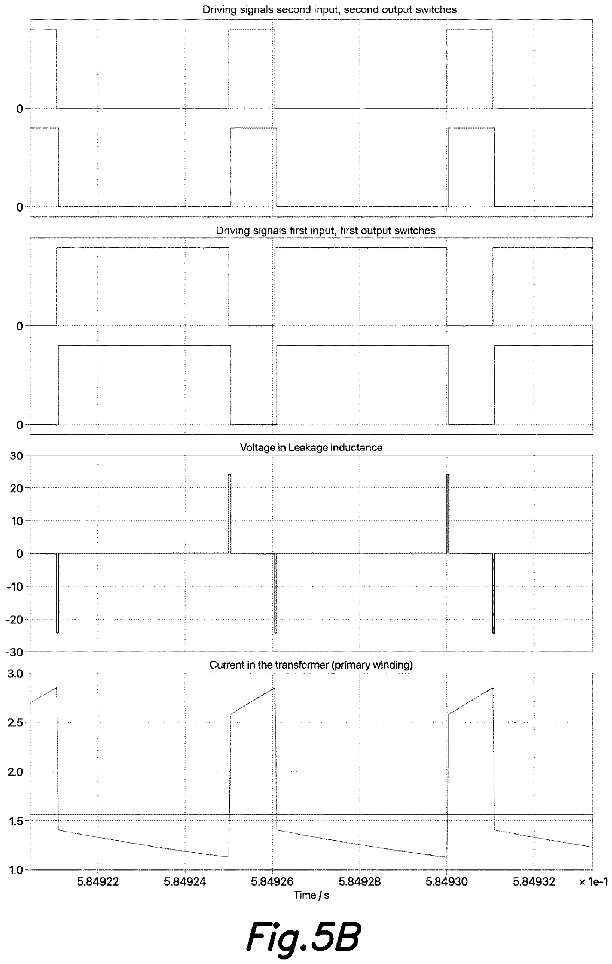

In Fig. 5A and Fig. 5B the switching frequency (200 kHz) waveforms are shown. They are the same waveforms for different line angles of 0 degrees and 90 degrees.

The driving signals of the power switches 11-14 of the input half-bridge 4 and output bridge 5 show the phase shift θ which produces the resulting voltage in the leakage inductance that drives the current injected to the transformer 40 from the input half-bridge 4 to the output half-bridge 5.

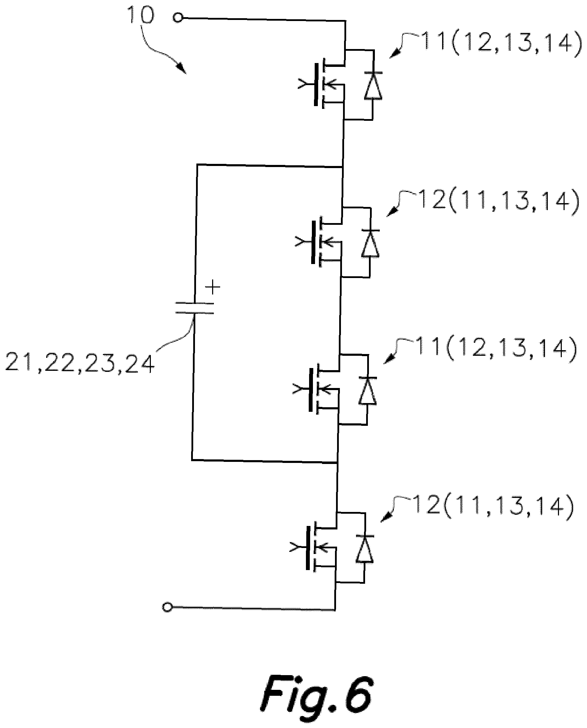

Fig. 6 shows that the generic embodiment of Fig. 2 can be enhanced replacing any of the capacitive and/or switching legs 6-9 by a switched capacitor leg 10, according to an embodiment of the present invention.

Depending on the electrical specifications of a given application, it may be convenient to increase the effect of the leakage inductance by an additional inductance in series with the transformer 40 as illustrated in Fig. 7.

With reference now to Fig. 8, another embodiment of the proposed power converter 1 is shown. In this case, different to the embodiment of Fig. 2, the power converter 1 comprises a three-phase architecture including a three-phase transformer 40 connected to a corresponding input switching leg 7 and output switching leg 9.

In other alternative embodiments, not shown, a power converter 1 can be connected to each one of the three-phases of a three-phase AC input voltage source 2.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible.

The scope of the present invention is defined in the claims that follow.

**Claims**

1. An AC-DC switch mode electrical power converter, comprising:

an input half-bridge (4) comprising a first input capacitor (21) and a second input capacitor (22), connected in series, configuring an input capacitive leg (6) of the input half-bridge (4), and a first input power switch (11) and a second input power switch (12), connected in series, configuring an input switching leg (7) of the input half-bridge (4);
an output half-bridge (5) comprising a first output capacitor (23) and a second output capacitor (24), connected in series, configuring an output capacitive leg (8) of the output half-bridge (5), and a first output power switch (13) and a second output power switch (14), connected in series, configuring an output switching leg (9) of the output half-bridge (5); and
a transformer (40), a secondary winding (42) of the transformer (40) being connected between a middle point (38) of the output capacitive leg (8) and a middle point (37) of the output switching leg (9),

**characterized in that:**

a first terminal of a primary winding (41) of the transformer (40) is configured to be connected to a terminal of an AC input voltage source (2); a second terminal of the primary winding (41) of the transformer (40) is connected to a middle point (35) of the input capacitive leg (6) or to a middle point (36) of the switching leg (7), being another terminal of the AC input voltage source (2) configured to be connected to the middle point (36) of the input switching leg (7) or to the middle point (35) of the capacitive leg (6), and **in that**, an input current and an output voltage of the AC-DC switch mode electrical power converter (1) are controlled based on control variables (129), the later comprising a duty cycle (d1) of the input half-bridge (4), a duty cycle (d2) of the output half-bridge (5), and a phase shift (θ) between the duty cycle (d1) of the half-bridge (4) and the duty cycle (d2) of the output half-bridge (5).

2. The AC-DC switch mode electrical power converter of claim 1, wherein the control variables (129) being calculated by a regulator (130) based on sensed output, input or internal variables (149) of the AC-DC switch mode electrical power converter (1).

3. The AC-DC switch mode electrical power converter of claim 2, wherein the first input power switch (11), the second input power switch (12), the first output power switch (13), and the second output power switch (14) are configured to be turned to an ON and/or OFF state based on driving signals (139), the driving signals (139) being generated by a modulator (131) that is operatively connected to the regulator (130) to receive the control variables (129) as inputs.

4. The AC-DC switch mode electrical power converter of any one of the previous claims, wherein the duty cycle ($d1$) of the input half-bridge (4) is configured to control the input current of the AC-DC switch mode electrical power converter (1) in order the input current be proportional to a voltage of the AC input voltage source (2), and the phase shift ($\theta$) is configured to regulate the output voltage of the AC-DC switch mode electrical power converter (1).

5. The AC-DC switch mode electrical power converter of claim 4, wherein the duty cycle ($d2$) of the output half-bridge (5) is configured to enable zero voltage switching, ZVS, of the first input power switch (11), second input power switch (12), first output power switch (13), and second output power switch (14).

6. The AC-DC switch mode electrical power converter of any one of the previous claims, further comprising a series inductance (45) that is connected in series with the primary winding (41) of the transformer (40).

7. The AC-DC switch mode electrical power converter of any one of the previous claims, wherein at least one of the input capacitive leg (6), input switching leg (7), output capacitive leg (8), or output switching leg (9) is configured as a switched capacitor leg (10).

8. The AC-DC switch mode electrical power converter of any one of the previous claims, wherein the transformer (40) is a three-phase transformer, and the AC-DC switch mode electrical power converter (1) further comprises three input switching legs (7) and three output switching legs (9).

9. The AC-DC switch mode electrical power converter of any one of the previous claims, further comprising a load (3), connected to a positive voltage DC rail (33) and to a negative voltage DC rail (34) of the output half-bridge (5).

Fig.1  Prior  Art

Fig.2

*Fig.3*

Fig.4A

Fig.4B

Fig.5A

Driving signals second input, second output switches

Driving signals first input, first output switches

Voltage in Leakage inductance

Current in the transformer (primary winding)

Time / s

*Fig.5B*

13

10

11(12,13,14)

12(11,13,14)

21,22,23,24

11(12,13,14)

12(11,13,14)

*Fig.6*

Fig.7

Fig.8

Europäisches
Patentamt
European
Patent Office
Office européen
des brevets

**EUROPEAN SEARCH REPORT**

Application Number

EP 23 38 2841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/222333 A1 (KHALIGH ALIREZA [US] ET AL) 9 August 2018 (2018-08-09) * the whole document * | 1-9 | INV. H02M7/00 H02M7/02 H02M7/04 |
| A | CN 201 345 618 Y (UNIV SOUTH CHINA TECH [CN]) 11 November 2009 (2009-11-11) * the whole document * | 1-9 | |
| A | US 6 239 584 B1 (JANG YUNGTAEK [US] ET AL) 29 May 2001 (2001-05-29) * the whole document * | 1-9 | |

TECHNICAL FIELDS
SEARCHED       (IPC)

H02M

The present search report has been drawn up for all claims

| Place of search | Date of completion of the search | Examiner |
|---|---|---|
| Munich | 8 February 2024 | Roussel, Maxime |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 38 2841

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2024

| Patent document cited in search report | | Publication date | Patent family member(s) | | Publication date |
|---|---|---|---|---|---|
| US 2018222333 | A1 | 09-08-2018 | US | 2016016479 A1 | 21-01-2016 |
| | | | US | 2018222333 A1 | 09-08-2018 |
| | | | WO | 2015192133 A2 | 17-12-2015 |
| CN 201345618 | Y | 11-11-2009 | NONE | | |
| US 6239584 | B1 | 29-05-2001 | NONE | | |

EPO FORM P0459

For more details about this annex : see Official Journal of the European Patent Office, No. 12/82

## REFERENCES CITED IN THE DESCRIPTION

**Non-patent literature cited in the description**

- **TUAN NGO et al.** *A Single-Phase Bidirectional Dual Active Half-Bridge Converter*
- **RAMESH SRINIVASAN et al.** *A unity power factor converter using a half-bridge topology*
- **J.A. COBOS et al.** *Direct Power Converter -DPx- for High Gain and High Current Applications*